# EUROPEAN PATENT APPLICATION

(11) **EP 4 836 151 A1**
(43) Date of publication of application: **04.11.2026**
(21) Application number: 24913523.7
(22) Date of filing: 23.12.2024
(51) Int. Cl.: H01M 50/342, H01M 50/147

(54) **SECONDARY BATTERY**

(30) Priority: 26.12.2023 KR 20230191918; 20.12.2024 KR 20240192195
(71) Applicant: LG Energy Solution, Ltd., Seoul 07335 (KR)
(72) Inventor: JEONG, Seyoung, Daejeon 34122 (KR)
(74) Representative: Goddar, Heinz J.
(86) International application number: PCT/KR2024/020995
(87) International publication number: WO 2025/143732

(57) **Abstract**

The present invention provides a secondary battery 10 including: an electrode assembly 100; a case 200 accommodating the electrode assembly 100 and having an open upper end; and a cap assembly 300 covering the open upper end of the case 200. The cap assembly 300 may include: a cap plate 310 provided with an exhaust port 312; and a plate-shaped vent member 320 disposed under the cap plate 310 and provided with a plurality of notched portions N having notches fracturing when an internal pressure of the case 200 is greater than or equal to a first threshold. The plurality of notched portions N may be arranged along a circumferential direction around a first portion 322 of the vent member 320 and spaced apart from each other by a predetermined distance. Each of the plurality of notched portions N may include: a pair of side portions N1 spaced apart from each other and extending outward from the first portion 322; and an outer portion N2 connecting an outer ends of the pair of side portions N1 and partially surrounding the first portion 322.

## Description

### [TECHNICAL FIELD]

This application claims the benefit of priority based on Korean Patent Application No. 10-2023-0191918 filed on December 26, 2023, and Korean Patent Application No. 10-2024-0192195 filed on December 20, 2024, entire contents disclosed in the document of the patent applications are comprised as a part of this specification.

The present invention relates to a secondary battery in which gas or heat generated inside is discharged quickly and evenly, thereby improving safety and increasing battery capacity or reducing the size of the battery.

### [BACKGROUND ART]

Secondary batteries are commonly used in not only portable devices but also electric vehicles (EV) or hybrid electric vehicles (HEV) driven by electric drive sources. Types of secondary batteries include lithium ion batteries, lithium polymer batteries, nickel cadmium batteries, nickel hydrogen batteries, nickel zinc batteries, etc.

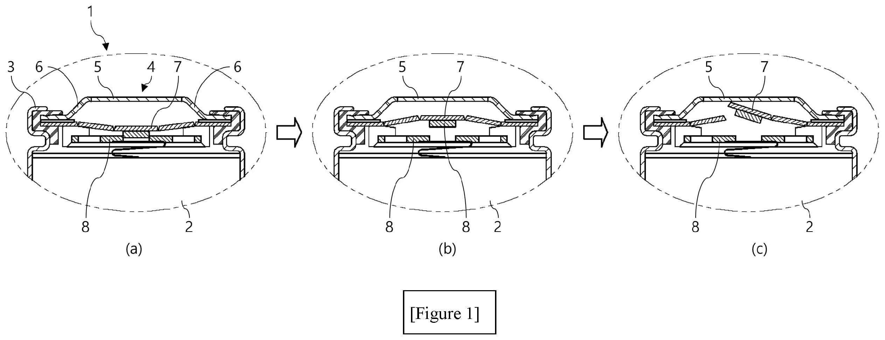

As secondary batteries are repeatedly charged and discharged, gas may be generated therein, which may increase internal pressure. When the internal pressure of the secondary battery is left unattended, there is a risk of the secondary battery exploding. Therefore, the secondary battery has a gas exhaust structure. The gas exhaust structure will be described with reference to FIG. 1.

FIG. 1 illustrates an exhaust structure of a conventional secondary battery. Referring to FIG. 1, the secondary battery 1 may include an electrode assembly 2, a case 3 accommodating the electrode assembly 2, and a cap assembly 4 covering the upper end of the case 3.

The cap assembly 4 may include a cap plate 5, a vent member 7, and a current interrupt device 8 (CID). The cap plate 5 may include an exhaust port 6. A plurality of exhaust ports 6 may be provided along the outer circumferential surface of the protruding cylindrical head of the cap plate 5. The cap plate 5 may be electrically connected by being coupled to the vent member 7. The current interrupt device 8 may be electrically connected between the electrode assembly 2 and the cap plate 5 by being coupled to the electrode lead of the electrode assembly 2 and the vent member 7 ((a) in FIG. 1).

When the internal pressure of the case 3 increases, the vent member 7 may be deformed and a portion of the current interrupt device 8 may be separated. As a result, the electrode assembly 2 and the cap plate 5 may be disconnected ((b) in FIG. 1). In addition, the vent member 7 may be fractured, and the gas and heat inside the case 3 may be discharged to the outside through the exhaust port 6 ((c) in FIG. 1). The vent member 7 may include a notch facilitating the fracture.

In the conventional exhaust structure, the notch is formed asymmetrically in the vent member 7 such that the vent member 7 may be open only to one side and closed to the other side ((c) in FIG. 1). Therefore, there is a risk of an explosion or ignition since the gas and heat are not sufficiently discharged only through the one side. In addition, the size of the exhaust port 6 on the one side must be increased in order to discharge the gas and heat quickly, which causes a problem in that the battery capacity is relatively reduced. Moreover, since the vent member 7 is opened only to the one side, the size of the fractured piece from the fracture of the notch is large, which may hinder the discharge of gas and heat.

Pertinent prior art is Korean Patent Application Publication No. 10-2011-0095118.

### [DISCLOSURE]

### [TECHNICAL PROBLEM]

In order to solve above-described problems, it is an object of the present invention to provide a secondary battery in which gas or heat generated therein is discharged quickly and uniformly, thereby improving safety.

It is an object of the present invention to provide a secondary battery in which the battery capacity is increased or reduced in size.

It is an object of the present invention to provide a secondary battery in which a notch of a vent member is sufficiently and reliably fractured.

It is an object of the present invention to provide a secondary battery in which the combination of a vent member and a current interrupt device is stably established.

It is an object of the present invention to provide a secondary battery in which a fractured piece formed by a fractured notch of a vent member is stably supported.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a secondary battery including an electrode assembly 100, a case 200, and a cap assembly 300.

The case 200 may accommodate the electrode assembly 100 and opened toward one side of a first direction.

The cap assembly 300 may cover an end portion of the one side of the first direction of the case 200.

The cap assembly 300 may include a cap plate 310 and a vent member 320.

The cap plate 310 may include an exhaust port 312.

The vent member 320 may be disposed at other side of the first direction of the cap plate 310.

The vent member 320 may be provided with a plurality of notched portions N.

In each of the plurality of notched portions N a notch may be formed.

When the internal pressure of the case 200 is greater than or equal to the first threshold, the plurality of notched portions N may be fractured.

The vent member 320 may be plate-shaped.

The plurality of notched portions N may be arranged along a circumferential direction around a first portion 322 of the vent member 320.

The plurality of notched portions N may be spaced apart from each other by a predetermined distance.

Each notched portion N may include a pair of side portions N1 and an outer portion N2.

The pair of side portions N1 may extend outward from the first portion 322.

The pair of side portions N1 may be spaced apart from each other.

The outer portion N2 may connect outer ends of the pair of side portions N1.

The outer portion N2 may partially surround the first portion 322.

Each notched portion N may be provided with a radial predetermined section S where a distance between the pair of side portions N1 gradually increases as it gets farther away from a center C of the first portion 322 in a radial direction.

In an embodiment, the outer portion N2 of each of the plurality of notched portions N may be convex outward away from the first portion 322.

In an embodiment, the plurality of notched portions N may have the size and shape corresponding to each other and may be spaced apart at an equal angular interval with the first portion 322 in center.

In an embodiment, each of the plurality of notched portions N has a sector shape with the first portion 322 in center.

In an embodiment, the plurality of notched portions N may have the size and shape corresponding to each other.

Three to six notched portions N may be provided.

In an embodiment, the plurality of notched portions N may have the size and shape corresponding to each other and may be spaced apart at an equal angular interval with the first portion 322 in center.

The vent member 320 may include: the first portion 322; a second portion 324; and a plurality of third portions 326.

The second portion 324 may surround the first portion 322 and the plurality of notched portions N.

The plurality of third portions 326 may be disposed between the plurality of notched portions N.

The plurality of third portions 326 may extend along one side or other side of a radial direction.

The plurality of third portions 326 may connect the first portion 322 and the second portion 324.

Each of the plurality of third portions 326 may have a width W greater than or equal to 1/25 and less than or equal to 1/4 of the diameter of the case 200 or the cap assembly 300.

In an embodiment, the width W of each of the plurality of third portions 326 may be greater than or equal to 1/25 and less than or equal to 3/20 of the diameter of the case 200 or the cap assembly 300.

In an embodiment, a center portion of the vent member 320 may be formed to protrude toward the other side of the first direction.

Accordingly, the other end of the first direction of the first portion 322 may be positioned at the other side of the first direction than that of the outer portion N2 of each of the plurality of notched portions N.

When the internal pressure of the case 200 is greater than or equal to a second threshold, the center portion of the vent member 320 may be bent to protrude toward the one side of the first direction.

Accordingly, the one end of the first direction of the first portion 322 may be positioned at the one side of the first direction than that of the outer portion N2 of each of the plurality of notched portions N when the plurality of notched portions N are not fractured.

In an embodiment, the second threshold may be different from the first threshold.

In an embodiment, the second threshold may be greater than or equal to the first threshold.

In an embodiment, a strength of the outer portion N2 may be different from that of the pair of side portions N1 in each of the plurality of notched portions N.

In an embodiment, the strength of the outer portion N2 may be less than that of the pair of side portions N1 in each of the plurality of notched portions N.

In an embodiment, a diameter R of the first portion 322 may be greater than or equal to 1/25 and less than or equal to 1/4 of a diameter of the case 200 or the cap assembly 300.

In an embodiment, the diameter R of the first portion 322 may be greater than or equal to 3/40 and less than or equal to 1/8 of the diameter of the case 200 or the cap assembly 300.

In an embodiment, the vent member 320 may be coupled and electrically connected to the cap plate 310.

The cap assembly 300 may further include a current interrupt device 340 coupled to the first portion 322 to electrically connect the electrode assembly 100 and the cap plate 310.

### [ADVANTAGEOUS EFFECTS]

According to embodiments of the present invention, a secondary battery may include: an electrode assembly 100; a case 200 accommodating the electrode assembly 100 and opened toward one side of a first direction; and a cap assembly 300 covering an end portion of the one side of the first direction of the case 200. The cap assembly 300 may include: a cap plate 310 provided with an exhaust port 312; and a plate-shaped vent member 320 disposed at other side of the first direction of the cap plate 310 and provided with a plurality of notched portions N each having a notch formed therein. The plurality of notched portions N may be fractured when an internal pressure of the case 200 is greater than or equal to a first threshold. The plurality of notched portions N may be arranged along a circumferential direction around a first portion 322 of the vent member 320 and spaced apart from each other by a predetermined distance. Each of the plurality of notched portions N may include: a pair of side portions N1 spaced apart from each other and extending outward from the first portion 322; and an outer portion N2 connecting outer ends of the pair of side portions N1 and partially surrounding the first portion 322. Each of the plurality of notched portions N may be provided with a radial predetermined section S where a distance between the pair of side portions N1 gradually increases as it gets farther away from a center C of the first portion 322 in a radial direction.

Accordingly, when the internal pressure of the secondary battery 10 increases, the plurality of notched portions N surrounding the first portion 322 of the vent member 320 may be fractured, and not only the outer portion N2 of each notched portion N but also the pair of side portions N1 may be fractured such that gas or heat generated inside the secondary battery 10 may be quickly discharged in all directions. For example, when projected onto a plane perpendicular to the first direction, gas or heat may be quickly discharged in a radial direction from the first portion 322. As a result, the risk of ignition or explosion of the secondary battery 10 may be reduced, thereby improving the safety of the secondary battery 10.

In addition, the exhaust port 312 of the cap plate 310 may be distributed in all directions to quickly discharge gas or heat passing through the fractured vent member 320 in all directions such that the size (e.g., width/diameter or height) of the cap plate 310 may be reduced. When the width/diameter of the cap plate 310 is reduced, a short circuit between the cap plate 310 and the case 200 may be prevented, thereby improving the safety of the secondary battery 10. When the height (width/length in the first direction) of the cap plate 310 is reduced, the width/length in the first direction of the electrode assembly 100 may be increased such that the battery capacity may be increased or the secondary battery may be made smaller.

In addition, since not only the outer portion N2 of each notched portion N but also the pair of side portions N1 may be fractured, even when the size of each notched portion N is reduced, gas or heat may be discharged more quickly than when only the outer portion N2 of each notched portion N is fractured. When the size of each notched portion N is reduced, the size of each fractured piece L formed by the fracture of each notched portion N may also be reduced. Accordingly, the size of the empty space provided between the cap plate 310 and the vent member 320 may be reduced such that a plurality of fractured pieces L may be bent to form an opening H in the vent member 320. As a result, the size (e.g., width/diameter or height) of the cap plate 310 may be reduced, thereby improving the safety of the secondary battery 10, increasing the battery capacity, or miniaturizing the secondary battery 10.

In addition, since each notched portion N has the predetermined section S, the overall size of a plurality of openings H formed by the fracture of the plurality of notched portions N may increase even when a plurality of notched portions N are positioned along the circumferential direction. As a result, gas or heat may be quickly discharged.

According to embodiments of the present invention, the outer portion N2 of each of the plurality of notched portions N may be convex outward away from the first portion 322.

Accordingly, the inner area (area of the fractured piece L) of each notched portion N may be increased. As a result, since each notched portion N may receive sufficient pressure, each notched portion N may be sufficiently fractured, thereby reducing the risk of ignition or explosion of the secondary battery 10 and improving the safety of the secondary battery 10.

According to embodiments of the present invention, the plurality of notched portions N may have the size and shape corresponding to each other and may be spaced apart at an equal angular interval with the first portion 322 in center.

Accordingly, when the plurality of notched portions N of the vent member 320 are fractured, gas or heat may be discharged uniformly and quickly in all directions. As a result, the risk of ignition or explosion of the secondary battery 10 may be reduced, thereby improving the safety of the secondary battery 10.

According to embodiments of the present invention, each of the plurality of notched portions N has a sector shape with the first portion 322 in the center.

Accordingly, the total size of the plurality of openings H formed by the fracture of the plurality of notched portions N may be increased. As a result, gas or heat may be quickly discharged.

In addition, when the plurality of notched portions N are fractured, gas or heat may be uniformly and quickly discharged in all directions. As a result, the risk of ignition or explosion of the secondary battery 10 may be reduced, thereby improving the safety of the secondary battery 10.

According to embodiments of the present invention, the plurality of notched portions N may have the size and shape corresponding to each other. Three to six notched portions N may be provided.

Accordingly, since the number of the simple notched portions N is six or less, the inner area (area of the fractured piece L) of each notched portion N may be sufficiently large. As a result, each notched portion N may be sufficiently fractured as each notched portion N receives sufficient pressure.

In addition, since the number of the notched portions N is three or more, the angle between the pair of side portions N1 of each notched portion N may be sufficiently reduced to a predetermined angle (e.g., 120 degrees) or less. As a result, the length of the outer portion N2 is reduced such that both the outer portion N2 and the pair of side portions N1 may be sufficiently fractured as the outer portion N2 as well as the pair of side portions N1 receives sufficient pressure.

According to embodiments of the present invention, the plurality of notched portions N may have the size and shape corresponding to each other and may be spaced apart at an equal angular interval with the first portion 322 in center. The vent member 320 may include: the first portion 322; a second portion 324 surrounding the first portion 322 and the plurality of notched portions N; and a plurality of third portions 326 disposed between the plurality of notched portions N, extending along one side or other side of a radial direction and connecting the first portion 322 and the second portion 324. Each of the plurality of third portions 326 has a width W greater than or equal to 1/25 and less than or equal to 1/4 of the diameter of the case 200 or the cap assembly 300.

Accordingly, since the width W of the third portion 326 is greater than or equal to 1/25 of the diameter of the case 200 or the cap assembly 300, the width of the third portion 326 is sufficiently large such that the third portion 326 may stably support the first portion 322 supporting the plurality of fractured pieces L. As a result, the plurality of fractured pieces L may be stably supported. In addition, since the width W of the third portion 326 is less than or equal to 1/4 of the diameter of the case 200 or the cap assembly 300, the size of the opening H formed by the fracture of the plurality of notched portions N may be sufficiently large. As a result, gas or heat may be quickly discharged.

According to embodiments of the present invention, the width W of each of the plurality of third portions 326 may be greater than or equal to 1/25 and less than or equal to 3/20 of the diameter of the case 200 or the cap assembly 300.

Accordingly, since the width W of the third portion 326 is greater than or equal to 1/25 of the diameter of the case 200 or the cap assembly 300, the width of the third portion 326 is sufficiently large such that the third portion 326 may stably support the first portion 322 supporting the plurality of fractured pieces L. As a result, the plurality of fractured pieces L may be stably supported. In addition, since the width W of the third portion 326 is less than or equal to 3/20 of the diameter of the case 200 or the cap assembly 300, the size of the opening H formed by the fracture of the plurality of notched portions N may be sufficiently large. As a result, gases or heat may be released quickly.

According to embodiments of the present invention, a center portion of the vent member 320 may be formed to protrude toward the other side of the first direction, and accordingly, the other end of the first direction of the first portion 322 may be positioned at the other side of the first direction than that of the outer portion N2 of each of the plurality of notched portions N. When the internal pressure of the case 200 is equal to or greater than the second threshold, the center portion of the vent member 320 is bent to protrude toward the one side of the first direction, and accordingly, the one end of the first direction of the first portion 322 may be positioned at the one side of the first direction than the upper end of the outer portion N2 of each of the plurality of notched portions N when the plurality of notched portions N are not fractured.

Accordingly, when the vent member 320 is deformed (flipped) such that the center portion of the vent member 320 protrudes toward the one side from the other side of the first direction, a force such as a compressive force or a tensile force (for example, toward one side or other side of the radial direction) may be concentrated and applied to a plurality of notched portions N having relatively small strength among the vent member 320. As a result, the plurality of notched portions N may be sufficiently fractured as the vent member 320 is deformed (flipped), thereby allowing gas or heat to be discharged quickly.

In particular, when the vent member 320 is deformed (flipped) and a compressive force or tensile force toward one side or other side of the radial direction is applied to the vent member 320, the degree of deformation of the side portion N1 having low rigidity due to the notch may differ from that of deformation of the two sides of the side portion N1 having high rigidity due to being without the notch. Due to such difference in the degrees of deformation, the side portion N1 is greatly pressurized along the lengthwise direction of the side portion N1 extending to one side or other side of the radial direction such that the side portion N1 may be sufficiently fractured. As a result, gas or hea t may be quickly discharged.

According to embodiments of the present invention, the second threshold may be different from the first threshold.

Accordingly, since bending (flip) and fracture of the vent member 320 may occur sequentially, the plurality of notched portions N may be reliably fractured.

According to embodiments of the present invention, the second threshold may be greater than or equal to the first threshold.

Accordingly, in case the second threshold is greater than the first threshold, when the internal pressure of the case 200 reaches the first threshold, the plurality of notched portions N may be fractured by the internal pressure but undergo incomplete fracture. However, as the internal pressure increases due to the insufficient fracture and reaches the second threshold, the vent member 320 is deformed (flipped) such that the plurality of notched portions N are sufficiently fractured. In addition, in case the second threshold is equal to the first threshold, the plurality of notched portions N may be sufficiently fractured by the internal pressure of the case 200 and the deformation of the vent member 320 as the internal pressure reaches the first threshold. Therefore, insufficient fracture of the plurality of notched portions N may be prevented, thereby improving the safety of the secondary battery 10 by reducing the risk of ignition or explosion of the secondary battery 10.

According to embodiments of the present invention, the strength of the outer portion N2 may be different from that of the pair of side portions N1 in each of the plurality of notched portions N.

Accordingly, since the fracture of the outer portion N2 and the side portion N1 may occur sequentially, a plurality of notched portions N may be reliably fractured.

According to embodiments of the present invention, the strength of the outer portion N2 may be less than that of the pair of side portions N1 in each of the plurality of notched portions N.

Accordingly, the outer portion N2 may be fractured before the pair of side portions N1. As a result, the fracture of the pair of side portions N1 connected to two ends of the outer portion N2 may be induced by the first fractured outer portion N2. Accordingly, not only the outer portion N2 of each notched portion N but also the pair of side portions N1 may be sufficiently fractured.

According to embodiments of the present invention, the diameter R of the first portion 322 may be greater than or equal to 1/25 and less than or equal to 1/4 of the diameter of the case 200 or the cap assembly 300.

Accordingly, since the diameter R of the first portion 322 is greater than or equal to 1/25 of the diameter of the case 200 or the cap assembly 300, the width of the first portion 322 is sufficiently large such that the plurality of fractured pieces L may be stably supported. And the coupling (e.g. welding) between the first portion 322 and the current interrupt device 340 may be stably established when the first portion 322 is coupled to the current interrupt device 340. In addition, since the diameter R of the first portion 322 is less than or equal to 1/4 of the diameter of the case 200 or the cap assembly 300, the size of the opening H formed by the fracture of the plurality of notched portions N may be sufficiently large. As a result, gas or heat may be quickly discharged.

According to embodiments of the present invention, the diameter R of the first portion 322 may be greater than or equal to 3/40 and less than or equal to 1/8 of the diameter of the case 200 or the cap assembly 300.

Accordingly, since the diameter R of the first portion 322 is greater than or equal to 3/40 of the diameter of the case 200 or the cap assembly 300, the width of the first portion 322 is sufficiently large such that the plurality of fractured pieces L may be stably supported. And the coupling (e.g. welding) between the first portion 322 and the current interrupt device 340 may be stably established when the first portion 322 is coupled to the current interrupt device 340. In addition, since the diameter R of the first portion 322 is less than or equal to 1/8 of the diameter of the case 200 or the cap assembly 300, the size of the opening H formed by the fracture of the plurality of notched portions N may be sufficiently large. As a result, gas or heat may be quickly discharged.

According to embodiments of the present invention, the vent member 320 may be coupled and electrically connected to the cap plate 310. The cap assembly 300 may further include a current interrupt device 340 coupled to the first portion 322 to electrically connect the electrode assembly 100 and the cap plate 310.

Accordingly, since the current interrupt device 340 is coupled to the first portion 322 where notched portion N is not formed, the vent member 320 and the current interrupt device 340 may be stably coupled. In addition, when the notched portion N is fractured, the first portion 322 may stably support the fractured piece L.

In addition to the advantageous effects described above, specific effects of the present invention will be described further while describing specific details of the present invention.

### [BRIEF DESCRIPTION OF DRAWINGS]

FIG. 1 illustrates an exhaust structure of a conventional secondary battery.
FIGS. 2 and 3 are cross-sectional views schematically illustrating a secondary battery according to an embodiment of the present invention.
FIGS. 4 to 6 are plan views illustrating three embodiments of the vent member of FIGS. 2 and 3.
FIG. 7 is a perspective view schematically illustrating the vent member of FIG. 4 open.

### [DESCRIPTION OF REFERENCE NUMERALS]

| | | | |
|---|---|---|---|
| 10: | secondary battery | | |
| 100: | electrode assembly | 110: | electrode lead |
| 200: | case | | |
| 300: | cap assembly | | |
| 310: | cap plate | 312: | exhaust port |
| 320: | vent member | 322: | first portion |
| 324: | second portion | 326: | third portion |
| N: | notch | N1: | side portion |
| N2: | outer portion | S: | predetermined section |
| L: | fractured piece | H: | opening |
| 330: | gasket | | |
| 340: | current interrupt device | | |
| 342: | first joint | 344: | second joint |

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein comprise expressions in plural form unless the context explicitly dictates otherwise. Terms such as "consists of" or "comprises" used herein should not be construed as necessarily comprising all of the elements or steps described in the specification, and should be construed as not comprising some of the elements or steps, or comprising additional elements or steps.

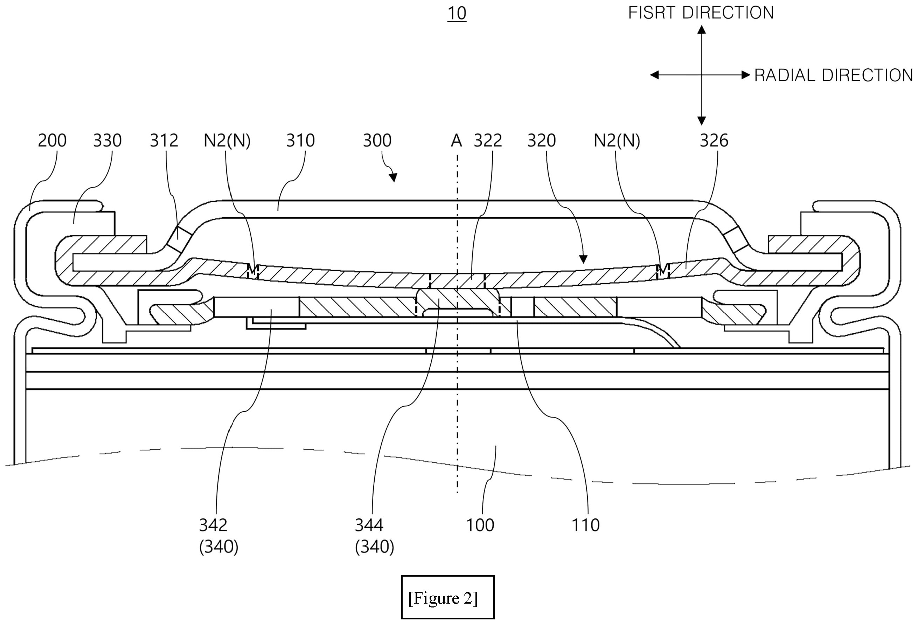

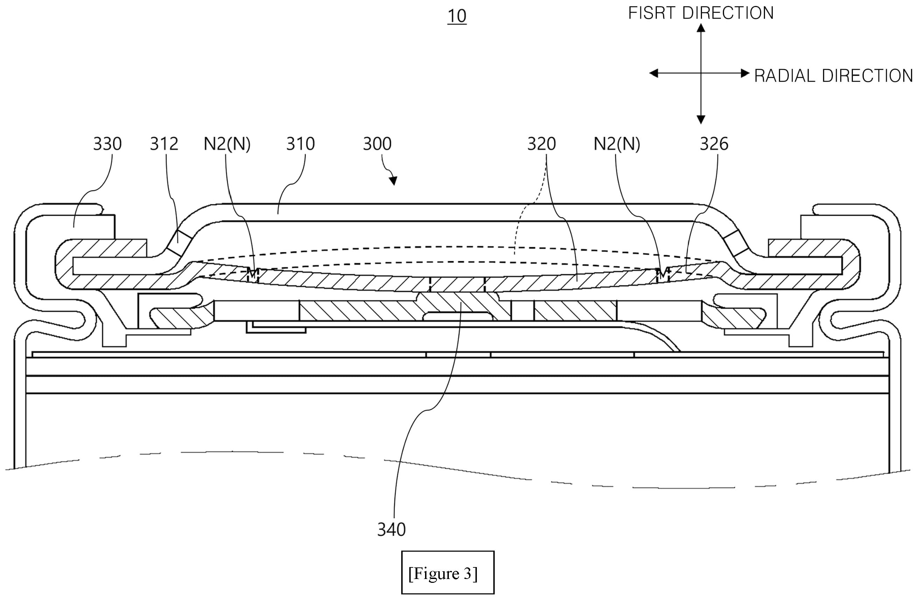

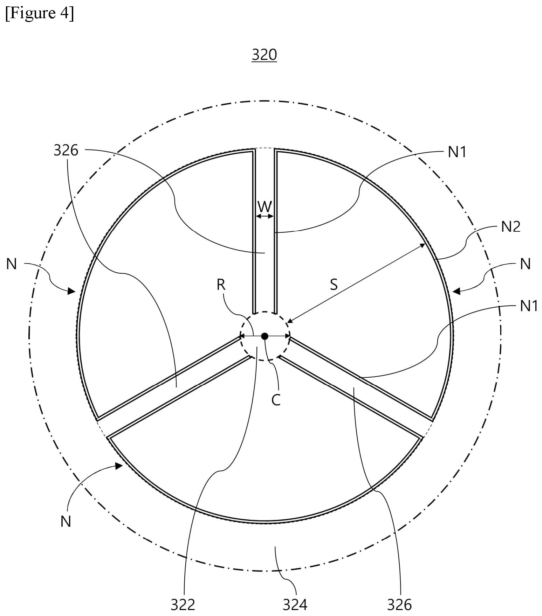

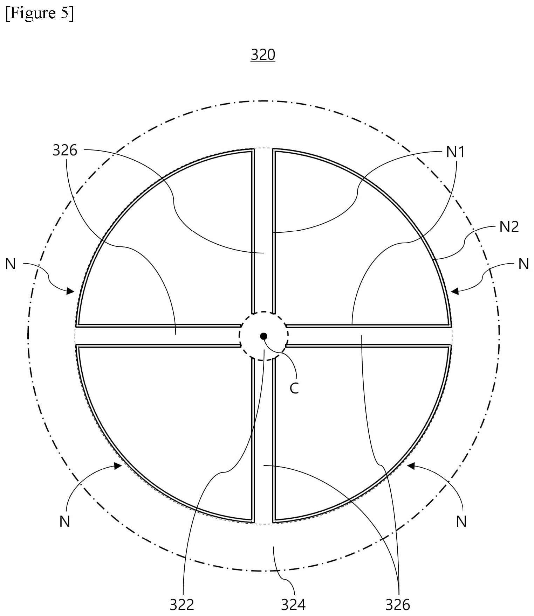

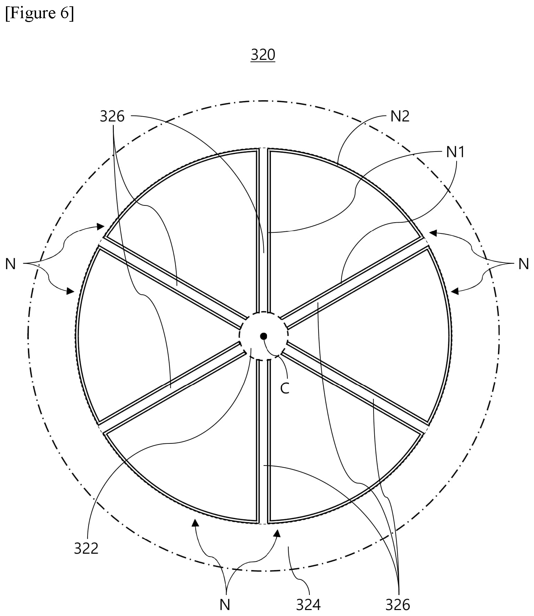

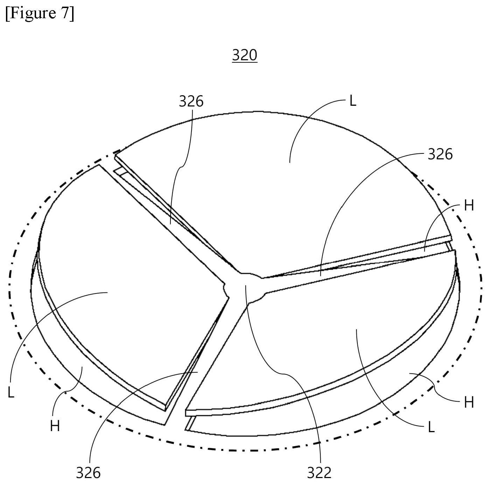

FIG. 1 illustrates a venting structure of a conventional secondary battery. FIGS. 2 and 3 are cross-sectional views schematically illustrating a secondary battery according to an embodiment of the present invention. FIGS. 4 to 6 are plan views illustrating three embodiments of the vent member of FIGS. 2 and 3. FIG. 7 is a perspective view schematically illustrating the vent member of FIG. 4 open.

### [SECONDARY BATTERY]

Referring to FIGS. 2 and 3, a secondary battery 10 according to an embodiment may include an electrode assembly 100, a case 200, and a cap assembly 300.

The electrode assembly 100 may be a jelly-roll type in which an anode sheet, a separator sheet and a cathode sheet are laminated and wound. However, it is not limited thereto. The electrode assembly 100 may include an electrode lead 110 protruding toward one side (e.g., upper side) in a first direction (e.g., vertical direction).

The case 200 may accommodate the electrode assembly 100. The case 200 may be opened toward the one side of the first direction.

The cap assembly 300 may cover an end portion of the one side of the first direction of the case 200.

The cap assembly 300 may include a cap plate 310 and a vent member 320. The cap assembly 300 may include a gasket 330. The cap assembly 300 may include a current interrupt device (CID) 340.

The cap plate 310 may include an exhaust port 312. The exhaust port 312 may be provided on the side surface or the upper surface of the cap plate 310. One or more exhaust ports 312 may be provided along a circumferential direction. Here, the circumferential direction may be a direction that surrounds an imaginary axis A that extends in the first direction and passes through the center of the first portion 322.

The cap plate 310 may be coupled to the vent member 320. The cap plate 310 may be electrically connected to the vent member 320.

A gasket 330 may be arranged between: the cap plate 310 and the vent member 320; and the case 200. The gasket 330 may insulate the case 200 from the cap plate 310 and the vent member 320.

The current interrupt device 340 may be disposed at other side of the first direction of the vent member 320. The current interrupt device 340 may electrically connect the electrode assembly 100 and the cap plate 310. In order to achieve this, the current interrupt device 340 may include a first joint 342 and a second joint 344. The first joint 342 may be coupled to the electrode lead 110 of the electrode assembly 100. The second joint 344 may be coupled to the first portion 322 of the vent member 320 that is electrically connected to the cap plate 310.

The current interrupt device 340 may electrically connect the electrode assembly 100 to the cap plate 310, and electrically disconnect the electrode assembly 100 from the cap plate 310 when the internal pressure of the case 200 is greater than or equal to a predetermined value.

For example, the current interrupt device 340 may include the first joint 342 and the second joint 344 as described above, and when the internal pressure of the case 200 is greater than or equal to the second threshold, the vent member 320 is deformed, and accordingly, the second joint 344 coupled to the vent member 320 may be separated from the first joint 342 as shown in FIG. 1. As a result, the electrode assembly 100 and the cap plate 310 may be electrically disconnected.

Hereinafter, the vent member 320 will be described.

### [VENT MEMBER]

The vent member 320 may be disposed at other side (e.g., lower side) of the first direction of the cap plate 310. The vent member 320 may be plate-shaped. The vent member 320 may include a material containing metal (e.g., aluminum).

### [NOTCH]

Referring further to FIGS. 4 to 7, a vent member 320 according to an embodiment may be provided with a plurality of notched portions N.

The plurality of notched portions N may be arranged along the circumferential direction described above around a first portion 322 of the vent member 320 described below.

The plurality of notched portions N may be spaced apart from each other by a predetermined distance. When an internal pressure of the case 200 is greater than or equal to the first threshold, the plurality of notched portions N may be fractured.

A notch may be formed in each of the plurality of notched portions N. The notch may be provided continuously or intermittently. Referring to FIG. 7, when the internal pressure of the secondary battery 10 increases and each of the plurality of notched portions N are fractured, a fractured piece L may be formed. One side of the fractured piece L may be joined to the first portion 322. An opening H may be formed in the vent member 320 by the bent or deformed fractured piece L (FIG. 7). Gas and heat may be discharged to the outside through the opening H and the exhaust port 312.

Each notched portion N may include a pair of side portions N1 and an outer portion N2.

The pair of side portions N1 may extend outward (e.g., toward one side or other side of a radial direction) from the first portion 322. The pair of side portions N1 may be spaced apart from each other.

Here, the radial direction may be a direction moving away from or closer to an imaginary axis on a plane perpendicular to the imaginary axis which extends in the first direction and passes through the center C of the first portion 322.

The outer portion N2 may connect outer ends of the pair of side portions N1. The outer portion N2 may partially surround the first portion 322.

Accordingly, when the internal pressure of the secondary battery 10 increases, the plurality of notched portions N surrounding the first portion 322 of the vent member 320 may be fractured, and not only the outer portion N2 of each notched portion N but also the pair of side portions N1 may be fractured such that gas or heat generated inside the secondary battery 10 may be quickly discharged in all directions. For example, when projected onto a plane perpendicular to the first direction, gas or heat may be quickly discharged in a radial direction from the first portion 322. As a result, the risk of ignition or explosion of the secondary battery 10 may be reduced, thereby improving the safety of the secondary battery 10.

In addition, the exhaust port 312 of the cap plate 310 may be distributed in all directions to quickly discharge gas or heat passing through the fractured vent member 320 in all directions such that the size (e.g., width/diameter or height) of the cap plate 310 may be reduced. When the width/diameter of the cap plate 310 is reduced, a short circuit between the cap plate 310 and the case 200 may be prevented, thereby improving the safety of the secondary battery 10. When the height (width/length in the first direction) of the cap plate 310 is reduced, the width/length in the first direction of the electrode assembly 100 may be increased such that the battery capacity may be increased or the secondary battery may be made smaller.

In addition, since not only the outer portion N2 of each notched portion N but also the pair of side portions N1 may be fractured, even when the size of each notched portion N is reduced, gas or heat may be discharged more quickly than when only the outer portion N2 of each notched portion N is fractured. When the size of each notched portion N is reduced, the size of each fractured piece L formed by the fracture of each notched portion N may also be reduced. Accordingly, the size of the empty space provided between the cap plate 310 and the vent member 320 may be reduced such that a plurality of fractured pieces L may be bent to form an opening H in the vent member 320. As a result, the size (e.g., width/diameter or height) of the cap plate 310 may be reduced, thereby improving the safety of the secondary battery 10, increasing the battery capacity, or miniaturizing the secondary battery 10.

The outer portion N2 of each of the plurality of notched portions N may be convex outward away from the first portion 322.

Accordingly, the inner area (area of the fractured piece L) of each notched portion N may be increased. As a result, since each notched portion N may receive sufficient pressure when the internal pressure of the secondary battery 10 increases, each notched portion N may be sufficiently fractured, thereby reducing the risk of ignition or explosion of the secondary battery 10 and improving the safety of the secondary battery 10.

Each notched portion N may be provided with a radial predetermined section S where a distance between the pair of side portions N1 gradually increases as it gets farther away from a center C of the first portion 322 in a radial direction.

Accordingly, since each notched portion N has the predetermined section S, the overall size of a plurality of openings H formed by the fracture of the plurality of notched portions N may increase even when a plurality of notched portions N are positioned along the circumferential direction. As a result, gas or heat may be quickly discharged.

A strength of the outer portion N2 may be different from that of the pair of side portions N1 in each of the plurality of notched portions N.

Accordingly, since the fracture of the outer portion N2 and the side portion N1 may occur sequentially, a plurality of notched portions N may be reliably fractured.

The strength of the outer portion N2 may be less than that of the pair of side portions N1 in each of the plurality of notched portions N.

Accordingly, the outer portion N2 may be fractured before the pair of side portions N1. As a result, the fracture of the pair of side portions N1 connected to two ends of the outer portion N2 may be induced by the first fractured outer portion N2. Accordingly, not only the outer portion N2 of each notched portion N but also the pair of side portions N1 may be sufficiently fractured.

Each of the plurality of notched portions N has a sector shape with the first portion 322 in the center.

Accordingly, the total size of the plurality of openings H formed by the fracture of the plurality of notched portions N may be increased. As a result, gas or heat may be quickly discharged.

In addition, when the plurality of notched portions N are fractured, gas or heat may be uniformly and quickly discharged in all directions. As a result, the risk of ignition or explosion of the secondary battery 10 may be reduced, thereby improving the safety of the secondary battery 10.

The plurality of notched portions N may have the size and shape corresponding to each other. Three to six notched portions N may be provided.

Accordingly, since the number of the notched portions N is 6 or less, the inner area (area of the fractured piece L) of each notched portion N may be sufficiently large. As a result, each notched portion N may be sufficiently fractured as each notched portion N receives sufficient pressure.

In addition, since the number of the notched portions N is three or more, the angle between the pair of side portions N1 of each notched portion N may be sufficiently reduced to a predetermined angle (e.g., 120 degrees) or less. As a result, the length of the outer portion N2 is reduced such that both the outer portion N2 and the pair of side portions N1 may be sufficiently fractured as the outer portion N2 as well as the pair of side portions N1 receives sufficient pressure.

The plurality of notched portions N may have the size and shape corresponding to each other and may be spaced apart at an equal angular interval with the first portion 322 in center.

Accordingly, when the plurality of notched portions N of the vent member 320 are fractured, gas or heat may be discharged uniformly and quickly in all directions. As a result, the risk of ignition or explosion of the secondary battery 10 may be reduced, thereby improving the safety of the secondary battery 10.

### [FIRST, SECOND AND THIRD PORTIONS]

The vent member 320 may include the first portion 322. The vent member 320 may include a second portion 324 and a third portion 326.

The first portion 322 may be a center portion of the vent member 320. One side of the plurality of fractured pieces L may be connected to the first portion 322 (FIG. 7).

A diameter R of the first portion 322 may be greater than or equal to 1/25 and less than or equal to 1/4 of a diameter of the case 200 or the cap assembly 300. For example, the diameter R of the first portion 322 may be greater than or equal to 1mm and less than or equal to 5mm. For example, when the diameter of the case 200 or the cap assembly 300 is 21mm, the diameter R of the first portion 322 may be greater than or equal to 1mm and less than or equal to 5mm.

Accordingly, since the diameter R of the first portion 322 is greater than or equal to 1/25 of the diameter of the case 200 or the cap assembly 300, the width of the first portion 322 is sufficiently large such that the plurality of fractured pieces L may be stably supported. And the coupling (e.g. welding) between the first portion 322 and the current interrupt device 340 may be stably established when the first portion 322 is coupled to the current interrupt device 340. In addition, since the diameter R of the first portion 322 is less than or equal to 1/4 of the diameter of the case 200 or the cap assembly 300, the size of the opening H formed by the fracture of the plurality of notched portions N may be sufficiently large. As a result, gas or heat may be quickly discharged.

Preferably, the diameter R of the first portion 322 may be greater than or equal to 3/40 and less than or equal to 1/8 of the diameter of the case 200 or the cap assembly 300. For example, the diameter R of the first portion 322 may be greater than or equal to 1.5mm and less than or equal to 2.5mm. For example, when the diameter of the case 200 or the cap assembly 300 is 21mm, the diameter R of the first portion 322 may be greater than or equal to 1.5mm and less than or equal to 2.5mm.

Accordingly, since the diameter R of the first portion 322 is greater than or equal to 3/40 of the diameter of the case 200 or the cap assembly 300, the width of the first portion 322 is sufficiently large such that the plurality of fractured pieces L may be stably supported. And the coupling (e.g. welding) between the first portion 322 and the current interrupt device 340 may be stably established when the first portion 322 is coupled to the current interrupt device 340. In addition, since the diameter R of the first portion 322 is less than or equal to 1/8 of the diameter of the case 200 or the cap assembly 300, the size of the opening H formed by the fracture of the plurality of notched portions N may be sufficiently large. As a result, gas or heat may be quickly discharged.

The first portion 322 may be coupled to the aforementioned current interrupt device 340. As a result, the current interrupt device 340 may electrically connect the electrode assembly 100 to the cap plate 310 through the first portion 322.

Accordingly, since the current interrupt device 340 is coupled to the first portion 322 where notched portion N is not formed, the vent member 320 and the current interrupt device 340 may be stably coupled. In addition, when the notched portion N is fractured, the first portion 322 may stably support the fractured piece L.

The second portion 324 may surround the first portion 322 and the plurality of notched portions N.

A plurality of third portions 326 may be provided. The plurality of third portions 326 may be disposed between the plurality of notched portions N. The plurality of third portions 326 may extend along one side or other side of the radial direction. The plurality of third portions 326 may connect the first portion 322 and the second portion 324.

When the plurality of notched portions N have the sizes and shapes corresponding to each other and are positioned at an equal angular interval with the first portion 322 in the center, the width W of each third portion 326 may be greater than or equal to 1/25 and less than or equal to 1/4 of the diameter of the case 200 or the cap assembly 300. For example, the width W of each third portion 326 may be 1mm or more and 5mm or less. For example, when the diameter of the case 200 or the cap assembly 300 is 21mm, the diameter R of the first portion 322 may range from 1mm to 5mm.

Accordingly, since the width W of the third portion 326 is greater than or equal to 1/25 of the diameter of the case 200 or the cap assembly 300, the width of the third portion 326 is sufficiently large such that the third portion 326 may stably support the first portion 322 supporting the plurality of fractured pieces L. As a result, the plurality of fractured pieces L may be stably supported. In addition, since the width W of the third portion 326 is less than or equal to 1/4 of the diameter of the case 200 or the cap assembly 300, the size of the opening H formed by the fracture of the plurality of notched portions N may be sufficiently large. As a result, gas or heat may be quickly discharged.

Here, it is preferable that the width W of each third portion 326 is greater than or equal to 1/25 and less than or equal to 3/20 of the diameter of the case 200 or the cap assembly 300. For example, the diameter R of the first portion 322 may be 1mm or more and 3mm or less. For example, when the diameter of the case 200 or the cap assembly 300 is 21mm, the diameter R of the first portion 322 may range from 1mm to 3mm.

Accordingly, since the width W of the third portion 326 is greater than or equal to 1/25 of the diameter of the case 200 or the cap assembly 300, the width of the third portion 326 is sufficiently large such that the third portion 326 may stably support the first portion 322 supporting the plurality of fractured pieces L. As a result, the plurality of fractured pieces L may be stably supported. In addition, since the width W of the third portion 326 is less than or equal to 3/20 of the diameter of the case 200 or the cap assembly 300, the size of the opening H formed by the fracture of the plurality of notched portions N may be sufficiently large. As a result, gases or heat may be released quickly.

### [DEFORMATION OF THE VENT MEMBER]

A center portion of the vent member 320 may be formed to protrude toward the other side (e.g., lower side) of the first direction. Accordingly, the other end (e.g., lower end) of the first direction of the first portion 322 may be positioned at the other side of the first direction than that of the outer portion N2 of each of the plurality of notched portions N (FIG. 2).

When the internal pressure of the case 200 is greater than or equal to a second threshold, the center portion of the vent member 320 may be bent to protrude toward the one side (e.g., upper side) of the first direction. Accordingly, the one end (e.g., upper end) of the first direction of the first portion 322 may be positioned at the one side of the first direction than that of the outer portion N2 of each of the plurality of notched portions N when the plurality of notched portions N are not fractured (dotted line in FIG. 3). Here, "when the plurality of notched portions N are not fractured" refers to each notched portion N not being fractured or assumed not to be fractured.

Accordingly, when the vent member 320 is deformed (flipped) such that the center portion of the vent member 320 protrudes toward the one side from the other side of the first direction, a force such as a compressive force or a tensile force (for example, toward one side or other side of the radial direction) may be concentrated and applied to a plurality of notched portions N having relatively small strength among the vent member 320. As a result, the plurality of notched portions N may be sufficiently fractured as the vent member 320 is deformed (flipped), thereby allowing gas or heat to be discharged quickly.

In particular, when the vent member 320 is deformed (flipped) and a compressive force or tensile force toward one side or other side of the radial direction is applied to the vent member 320, the degree of deformation of the side portion N1 having low rigidity due to the notch may differ from that of deformation of the two sides of the side portion N1 having high rigidity due to being without the notch. Due to such difference in the degrees of deformation, the side portion N1 is greatly pressurized along the lengthwise direction of the side portion N1 extending to one side or other side of the radial direction such that the side portion N1 may be sufficiently fractured. As a result, gas or heat may be quickly discharged.

The second threshold may be different from the first threshold described above.

Accordingly, bending (flip) and fracture of the vent member 320 may be sequentially performed such that the plurality of notched portions N may be reliably fractured.

The second threshold may be greater than or equal to the first threshold described above.

Accordingly, in case the second threshold is greater than the first threshold, when the internal pressure of the case 200 reaches the first threshold, the plurality of notched portions N may be fractured by the internal pressure but undergo incomplete fracture. However, as the internal pressure increases due to the insufficient fracture and reaches the second threshold, the vent member 320 is deformed (flipped) such that the plurality of notched portions N are sufficiently fractured. In addition, in case the second threshold is equal to the first threshold, the plurality of notched portions N may be sufficiently fractured by the internal pressure of the case 200 and the deformation of the vent member 320 as the internal pressure reaches the first threshold. Therefore, insufficient fracture of the plurality of notched portions N may be prevented, thereby improving the safety of the secondary battery 10 by reducing the risk of ignition or explosion of the secondary battery 10.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being comprised in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A secondary battery comprising:
an electrode assembly 100;
a case 200 accommodating the electrode assembly 100 and opened toward one side of a first direction; and
a cap assembly 300 covering an end portion of the one side of the first direction of the case 200,
wherein the cap assembly 300 comprising: a cap plate 310 provided with an exhaust port 312; and a plate-shaped vent member 320 disposed at other side of the first direction of the cap plate 310 and provided with a plurality of notched portions N each having a notch formed therein,
wherein the plurality of notched portions N can be fractured when an internal pressure of the case 200 is greater than or equal to a first threshold,
the plurality of notched portions N are arranged along a circumferential direction around a first portion 322 of the vent member 320 and spaced apart from each other by a predetermined distance, and
each of the plurality of notched portions N comprises: a pair of side portions N1 spaced apart from each other and extending outward from the first portion 322; and an outer portion N2 connecting outer ends of the pair of side portions N1 and partially surrounding the first portion 322, and provided with a radial predetermined section S where a distance between the pair of side portions N1 gradually increases as it gets farther away from a center C of the first portion 322 in a radial direction.

2. The secondary battery of claim 1, wherein the outer portion N2 of each of the plurality of notched portions N is convex outward away from the first portion 322.

3. The secondary battery of one of claims 1 and 2, wherein the plurality of notched portions N have size and shape corresponding to each other and are spaced apart at an equal angular interval with the first portion 322 in center.

4. The secondary battery of any one of claims 1 to 3, wherein each of the plurality of notched portions N has a sector shape with the first portion 322 in center.

5. The secondary battery of claim 4, wherein the plurality of notched portions N have size and shape corresponding to each other, and
three to six notched portions N are provided.

6. The secondary battery of claim 4, wherein the plurality of notched portions N have size and shape corresponding to each other and are spaced apart at an equal angular interval with the first portion 322 in center, and
the vent member 320 comprises: the first portion 322; a second portion 324 surrounding the first portion 322 and the plurality of notched portions N; and a plurality of third portions 326 disposed between the plurality of notched portions N, extending along one side or other side of a radial direction and connecting the first portion 322 and the second portion 324, each of the plurality of third portions 326 having a width W greater than or equal to 1/25 and less than or equal to 1/4 of a diameter of the case 200 or the cap assembly 300.

7. The secondary battery of claim 6, wherein the width W of each of the plurality of third portions 326 is greater than or equal to 1/25 and less than or equal to 3/20 of the diameter of the case 200 or the cap assembly 300.

8. The secondary battery of any one of claims 1 to 7, wherein
a center portion of the vent member 320 is formed to protrude toward the other side of the first direction such that the other end of the first direction of the first portion 322 is positioned at the other side of the first direction than that of the outer portion N2 of each of the plurality of notched portions N, and
the center portion of the vent member 320 is bent to protrude toward the one side of the first direction when the internal pressure of the case 200 is greater than or equal to a second threshold such that the one end of the first direction of the first portion 322 is positioned at the one side of the first direction than that of the outer portion N2 of each of the plurality of notched portions N when the plurality of notched portions N are not fractured.

9. The secondary battery of claim 8, wherein the second threshold is different from the first threshold.

10. The secondary battery of claim 8, wherein the second threshold is greater than or equal to the first threshold.

11. The secondary battery of any one of claims 1 to 10, wherein a strength of the outer portion N2 is different from that of the pair of side portions N1 in each of the plurality of notched portions N.

12. The secondary battery of claim 11, wherein the strength of the outer portion N2 is less than that of the pair of side portions N1 in each of the plurality of notched portions N.

13. The secondary battery of any one of claims 1 to 12, wherein a diameter R of the first portion 322 is greater than or equal to 1/25 and less than or equal to 1/4 of a diameter of the case 200 or the cap assembly 300.

14. The secondary battery of claim 13, wherein the diameter R of the first portion 322 is greater than or equal to 3/40 and less than or equal to 1/8 of the diameter of the case 200 or the cap assembly 300.

15. The secondary battery of any one of claims 1 to 14, wherein the vent member 320 is coupled and electrically connected to the cap plate 310, and
the cap assembly 300 further comprises a current interrupt device 340 coupled to the first portion 322 to electrically connect the electrode assembly 100 and the cap plate 310.
